# EUROPÄISCHE PATENTSCHRIFT

(11) **EP 3 254 895 B1**
(45) Veröffentlichungstag und Bekanntmachung des Hinweises auf die Patenterteilung: **25.03.2020**
(21) Anmeldenummer: 17000825.4
(22) Anmeldetag: 15.05.2017
(51) Int. Cl.: B60P 7/08

(54) **LADUNGSFIXIERUNGSGURTSYSTEM FÜR LASTKRAFTWAGEN, ODER LASTKRAFTWAGENANHÄNGER**
LOAD FIXING BELT SYSTEM FOR TRUCKS OR TRAILERS
SYSTÈME DE FIXATION DE CHARGE POUR UN CAMION OU UNE REMORQUE DE CAMION

(30) Priorität: 25.05.2016 DE 102016006492
(43) Veröffentlichungstag der Anmeldung: 13.12.2017
(73) Patentinhaber: Bruegelmann, Dirk, 42897 Remscheid (DE)
(72) Erfinder: Bruegelmann, Dirk, 42897 Remscheid (DE)
(74) Vertreter: Schmidt, Karl Michael

(56) Entgegenhaltungen:
- EP-A2- 1 371 521
- DE-A1- 10 241 108
- DE-A1- 19 944 538
- DE-U1- 20 109 024
- DE-U1-202010 007 657

## Beschreibung

Die Erfindung betrifft ein Ladungsfixierungsgurtsystem für Lastkraftwagen, oder Lastkraftwagenanhänger, bei welchem auf der Bodenseite einer Ladefläche eines Lastkraftwagens oder eines Lastkraftwagenanhängers mindestens eine die Gurtlänge eines Fixierungsgurtes einziehende Rolle oder Ratsche angeordnet ist, über welche die über das zu fixierende Ladegut zurrbare Gurtlänge veränderbar und fixierbar ist, gemäß Oberbegriff des Patentanspruches 1.
Aus dem Stand der Technik sind verschiedene Einrichtungen bekannt. So zeigt die US 8,974,158 B1 ein Gurtsystem welches von oben über die Ladung, vorzugsweise eines Pickup-Fahrzeuges gespannt und an dem Fahrzeug befestigt wird.
Aus dem US Patent 3,697,045 ist ein Gurtsystem für einen Anhänger eines Lastkraftwagens bekannt. Hierbei wird der Gurt an eine Klemmrolle am Boden des Fahrzeuges befestigt, und von Hand über das Ladegut gespannt.
Aus der DE 199 44 538 A1 ist ein Ladungsfixierungsgurtsystem mit den oberbegrifflichen Merkmalen bekannt.
Der Erfindung liegt die Aufgabe zugrunde, ein Ladungsfixierungsgurtsystem so zu verbessern, dass sowohl die Einbringung als auch die Fixierung der Ladung vereinfacht wird, und dass zudem eine sichere Ladungsfixierung gegeben ist.

Die gestellte Aufgabe wird bei einem Ladungsfixierungsgurtsystem für Lastkraftwagen, oder Lastkraftwagenanhänger der gattungsgemäßen Art erfindungsgemäß durch die kennzeichnenden Merkmale des Anspruches 1 gelöst.

Weitere vorteilhafte Ausgestaltungen sind in den abhängigen Ansprüchen angegeben.

Kern der Erfindung ist, dass der Fixierungsgurt über sämtliche Ecken des Lade-Lichtraumprofiles über Umlenkrollen geführt ist, und dass zumindest die oberen Umlenkrollen an Feder- oder Teleskopmitteln befestigt sind, derart, das diese durch die Straffung des Fixierungsgurtes auf die Ladung zu bewegbar, und auf der selben anlegbar sind.
Das heisst mit anderen Worten, dass der Gurt ggfs ein umlaufender Gurt sein kann, aber nicht sein muss. Wichtig ist dabei, dass die oberen Umlenkrollen durch ein enger Ziehen des Gurtes unten an der besagten Ratsche, sich an Federelementen aus der oberen Eckposition weg bewegen lassen, und zwar auf die Ladung zu, von oben, bis der Fixiergurt oben auf der Ladung aufliegt, und der Fixiergurt unten festgezurrt wird, bspw über die besagte Ratsche.

So lässt sich eine Ladungssicherung bewerkstelligen, die individuell an die jeweils benutzte Außen-Kontur und Größe der Ladung anpassbar ist.

In weiterer vorteilhafter Ausgestaltung ist angegeben, dass das Lade-Lichtraumprofil viereckig ist. Dieses wird dann von dem Fixiergut umschlossen, und zwar so, das es zunächst das ganze Lade-Lichtraumprofil freigibt.

In weiterer vorteilhafter Ausgestaltung ist angegeben, dass in jeder der vier Ecken des Lade-Lichtraumprofiles eine Umlenkrolle für den Fixierungsgurt angeordnet ist, und dass mindestens eine der unteren Umlenkrollen als Fixierungsgurt straffende und in der resultierenden variablen FixierungsgurtLänge fixierende Ratsche angeordnet und vorgesehen ist.
Der Fixierungsgurt wird nach dem Beladen der Ladefläche des Fahrzeuges unten über eine Ratsche in seiner Länge reduziert. Dadurch bewegen sich die oberen Umlenkrollen, die auf Federlementen befestigt sind, auf die Ladung zu, und zwar solange, bis sich der Fixierungsgurt oben auf die Ladung auflegt und über die Ratsche vollends festgezurrt wird.

In weiterer vorteilhafter Ausgstaltung ist angegeben, dass die Ratsche mit einem automatisch ansteuerbaren Betätigungsmittel versehen ist, durch welche die Straffung des Fixierungsgurtes über der Ladung von einer Fernsteuerung aus betätigbar ist. Dies kann bspw über eine motorisch betriebene Ratsche erfolgen, die entweder vom Heck des Fahrzeuges oder Anhängers, oder sogar von der Fahrzeugführerkanzel aus gesteuert wird

In weiterer vorteilhafter Ausgestaltung ist angegeben, dass Sensoren vorgesehen sind, die die Endlage des vollständig auf der Ladung aufgezurrten Fixierungsgurtes durch eine Kraftmessung ermitteln, und ein enstprechendes Meldesignal generien. Dadurch kann der Vorgang in seiner Zuverlässigkeit automatisch überwacht werden. Die Sensoren können dabei Kraftmesssreifen, bspw Piezosensoren sein, und ggfs zusötzlich noch von einer Kamera überwchbar sein, deren Bild bspw in Coickpit des Zugfahrzeuges auf einem Bildschrim abgebildet wird. So käme bei der Fernsteuerung zum reinen Signalwert auch die Sichtkontrolle.

In weiterer vorteilhafter Ausgestaltung ist angegeben, dass bei einem nicht nur viereckigen Laderaumprofil auch ein fünf-, oder mehreckiges Laderaumprofil dadurch berücksichtig wird, indem die Positionen der Umlenkrollen, zumindest oben ein entsprechendes Polygon beschreiben, und dass in jedem Eck- oder Knickpunkt des Polygons eine auf Feder- und/oder Teleskopmitteln befestigte Umlenkrolle vorgesehen ist. So können neben viereckigen Laderaumprofilen auch bspw fünfeckige Laderaumprofile eine solche Einrichtung sinnvoll einsetzen.

In weiterer vorteilhafter Ausgestaltung ist angegeben, dass das Laderaumprofil von einem entsprechend vertikal umlaufenden Profil gebildet wird, welches mit dem Lastkraftwagen oder dem Lastkraftwagenanhänger verbunden oder verbindbar ist.

In weiterer vorteilhafter Ausgestaltung ist angegeben, dass eine Mehrzahl besagter Ladungsfixierungsgurtsysteme über die Länge der Ladefläche des Lastkraftwagens und/oder des Lastkraftwagenanhängers verteilt angeordnet sind. So wird die Ladung nicht nur im Bereich nahe der Ladekante gesichert, sondern an disketen Punkten übe die gesamte Länge.

In weiterer vorteilhafter Ausgestaltung ist angegeben, dass die Feder- oder Teleskopmitteln auf denen die besagten oberen Umlenkrollen befestigt sind, aus elastischen Bändern bestehen. So bewegen sich die oberen Umlenkrollen samt dem Fixierungsgurt dann in Richtung auf die Oberseite der Ladung zu, indem der Fixierungsgurt über de Ratsche schrittweise oin seiner effektiven Länger verkürzt wird. Die Federelemente selbst sind dabei wiederum mit einem Rahmen verbunden der das Laderaumprofil baulich umfasst.

Erfindungsgemäß ist vorgesehen, dass die Umlenkrollen oben in Schlitten angeordnet sind, die in jeweils einem aufrecht stehend abgeordenten Profil geführt auf- und abwärts laufen können, und durch Straffung des umlaufenden Fixierungsgurtes auf die Ladung zu bewegbar sind.

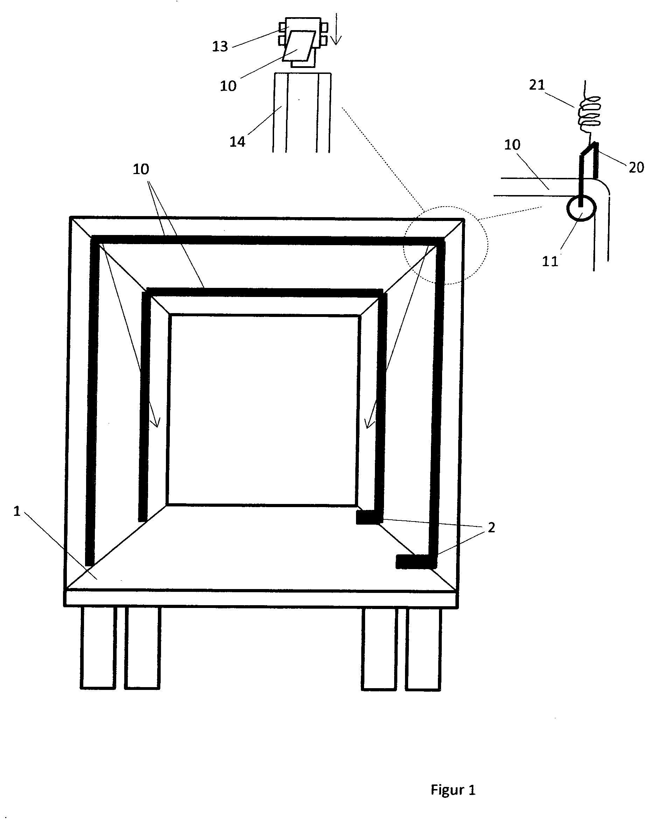

Ein Ausführungsbeispiel der Erfindung ist in der Zeichnung dargestellt und nachfolgend näher beschrieben. Figur 1 zeigt schematisch die offene Rückseite eines Lastkraftwagens 1. Dabei ist der Fixierungsgurt 10 von der linken unteren Ecke nach oben geführt zu einer ersten Umlenkrolle 12 links oben, von dort nach rechts oben zu einer weiteren Umlenkrolle 11, und von dort dann wieder nach rechts unten. Rechts unten ist hierbei eine Ratsche 2 vorgesehen, die als Handratsche oder als elektromechanisch betriebene Ratsche ausgestaltet ist. Der Fixierungsgurt 10 ist an der linken unteren Ecke starr befestigt. Die Umlenkrollen 11 und 12 in der oberen linken Ecke, und der oberen rechten Ecke sind dort mit jeweils einem Teleskopmittel, bspw einer Feder 21 so fixiert, dass bei einer Straffung bzw. Längenreduktion des Fixierungsgurtes 10 die Umlenrollen 11 und 12 nach unten zur Ladung gezogen werden können, bis sich der Fixierungsgurt 10 dort auf der Ladung, nach der sich individuell ergebenden Kontur anlegen kann.

Gemäß Figur 1, sind mehrere solcher Fixierungsgurte entsprechend auf die Länge der Ladefläche verteilt angeordnet.

An der Handratsche 2 wird das freie Ende des Fixierungsgurtes 10 über einen Aufroller mit Federspeicher geführt, damit das eingezogene Ende des Fixierungsgurtes dort automatisch aufgerollt wird.

In einer gezeigten Variante sind die Umlenkrollen 11 und 12 in der rechten und linken oberen Ecke an einem Bügel 20 befestigt, der seinerseits mit einer Feder 21 versehen ist, die an einem Ende an dem Bügel und am anderen Ende an der rechten bzw linken oberen Ecke des Laderaumes, bspw an einem Rahmen, befestigt ist bzw sind.

Die Ladungssicherung kann dann durch drei verschiedene, Maßnahmen erfolgen.
Bei allen Systemen wird der Fixierungsgurt 10 in jeweils einer Seite des Lastkraftwagens am Boden direkt an der Außenwand befestigt.
Von dort aus läuft der Fixierungsgurt nach oben durch eine Umlenkrolle 11 einer der oberen Ecken, dann an der Decke entlang zur anderen Seite und von
dort aus über eine weitere Umlenkrolle 12 nach unten und durch den Boden.
Unterhalb des Fahrzeuges wird der Fixierungsgurt aufgewickelt und gespannt.

Ein Alternative besteht darin, dass die Umlenkrolle 11, 12 mittels Feder 21, oder Gummiband, oder Seilzug oder ähnlicher Mechanik an der oberen Ecke zwischen Decke und Seitenwand gehalten wird. Dazu ist die Umlenkrolle jeweils in einem Bügel 20 geführt, der wiederum mit der besagten Feder versehen ist, die mit dme anderen Ende in der jeweilgen oberen Ecke befestigt ist.
Wird der Fixierungsgurt 10 vorgespannt, folgen die beiden Umlenkrollen 11 und 12 dem Gurt in Richtung des Kraftvektors.
Nachdem der Gurt an der Ladung anliegt, wird dieser mittels Handratsche oder (elektro-)mechanischer Spannvorrichtung gespannt.

Erfindungsgemäß ist vorgesehen, dass die Umlenkrolle auf einem Schlitten 13 befestigt ist, der in einem, in der Seitenwand hochkant angeordneten Führungsprofil 14, rollend oder gleitend gelagert ist. Der Schlitten wird mittels Feder, Gummiband, Seilzug oder ähnlicher Mechanik an der obersten Position gehalten.
Wird der Gurt vorgespannt, bewegen sich beide Schlitten nach unten. Nachdem der Gurt an der Ladung anliegt, wird dieser mittels Handratsche 2 oder (elektro-)mechanischer Spannvorrichtung gespannt. Alternativ dazu kann auch ausgestaltet sein,
dass die Umlenkrollen 11 und 12 sich auf einem Schlitten, der in einem, sich in der Seitenwand hochkant befindendem Profil, rollend oder gleitend gelagert ist. (3)
Der Schlitten kann (elektro)-mechanisch nach oben und unten verfahren werden.
Ein Gurtaufroller unterhalb des Fahrzeuges hält den Gurt auf Spannung.
Zum beladen des LKWs fahren die beiden Schlitten mit den Umlenkrollen in ihre obere Position. Durch die Vorspannkraft des Gurtaufrollers 3 hängt der Fixierungsgurt zwischen beiden Umlenkrollen nicht durch. Zur Ladungssicherung fahren die Schlitten 13 in ihrem Profil 14 nach unten, wodurch sich der Fixierungsgurt mit definierter Vorspannung auf die Ladung legt.
Sind die Schlitten an ihrer unteren Position angekommen, wird der Gurt mittels Handratsche 2 oder (elektro-) mechanischer Spannvorrichtung gespannt.

Abweichend zur Darstellung in Figur 1 kann der Fixierungsgurt 10 auch an der linken unteren Ecke über eine Umlenkrolle geführt sein. Dabei würde der Fixierungsgurt 10 an diesem offenen Ende bspw unter dem Fahrzeugboden entlang geführt oder befesteigt sein.

Bei allen Systemen könnten Kraftmesser angebracht werden, die eine Laständerung während des Transportes registrieren und dem Fahrer über einen Fehler in der Ladungssicherung informieren können.

### Bezugszeichenliste:

- 1: Lastkraftwagen, Ladefläche
- 2: Handratsche
- 3: Aufroller

- 10: Fixierungsgurt
- 11: Umlenkrolle
- 12: Umlenkrolle
- 13: Schlitten mit Umlenkrolle
- 14: Führungsprofil

- 20: Bügel
- 21: Feder

## Patentansprüche

1. Ladungsfixierungsgurtsystem für Lastkraftwagen, oder Lastkraftwagenanhänger, bei welchem auf der Bodenseite einer Ladefläche eines Lastkraftwagens oder eines Lastkraftwagenanhängers mindestens eine die Gurtlänge eines Fixierungsgurtes (10)
einziehende Rolle oder Ratsche angeordnet ist, über welche die über das zu fixierende Ladegut zurrbare Gurtlänge veränderbar und fixierbar ist, wobei der Fixierungsgurt (10) über sämtliche Ecken des Lade-Lichtraumprofiles über Umlenkelemente geführt ist, und dass zumindest die oberen Umlenkelemente an.Feder- oder Teleskopmitteln befestigt sind, derart, dass diese durch die Straffung des Fixierungsgurtes (10) auf die Ladung zu bewegbar, und auf der selben anlegbar sind, **dadurch gekennzeichnet, dass** die Umlenkelemente Umlenkrollen (11, 12) sind und dass die Umlenkrollen (11, 12) oben in Schlitten (13) angeordnet sind, die jeweils in einem aufrecht stehend angeordneten Profil (14) geführt auf- und abwärts laufen können, und durch Straffung des umlaufenden Fixierungsgurtes (10) auf die Ladung zu bewegbar sind.

2. Ladungsfixierungsgurtsystem nach Anspruch 1,
**dadurch gekennzeichnet,**
**dass** das Lade-Lichtraumprofil viereckig ist

3. Ladungsfixierungsgurtsystem nach Anspruch 2,
**dadurch gekennzeichnet,**
**dass** in jeder der vier Ecken des Lade-Lichtraumprofiles eine Umlenkrolle (11, 12) für den Fixierungsgurt (10) angeordnet ist, und dass mindestens eine der unteren Umlenkrollen als Fixierungsgurt straffende und in der resultierenden variablen Fixierungsgurtlänge fixierende Ratsche (2) angeordnet ist.

4. Ladungsfixierungsgurtsystem nach einem der vorhergehenden Ansprüche,
**dadurch gekennzeichnet,**
**dass** die Ratsche (2) mit einem automatisch ansteuerbaren Betätigungsmittel versehen ist, durch welche die Straffung des Fixierungsgurtes (10) über der Ladung von einer Fernsteuerung aus betätigbar ist.

5. Ladungsfixierungsgurtsystem nach einem der vorhergehenden Ansprüche,
**dadurch gekennzeichnet,**
**dass** Sensoren vorgesehen sind, die die Endlage des vollständig auf der Ladung aufgezurrten Fixierungsgurtes (10) durch eine Kraftmessung ermitteln, und ein entsprechendes Meldesignal generieren.

6. Ladungsfixierungsgurtsystem nach einem der vorhergehenden Ansprüche,
**dadurch gekennzeichnet,**
**dass** ein nicht nur viereckiges Laderaumprofil, sondern auch eine fünf- oder mehreckiges Laderaumprofil dadurch berücksichtigbar ist, dass die Position der Umlenkrollen, zumindest oben ein entsprechendes Polygon beschreiben, und dass in jedem Eck- oder Knickpunkt des Polygons eine auf Feder- und/oder Teleskopmitteln befestigte Umlenkrolle vorgesehen ist.

7. Ladungsfixierungsgurtsystem nach einem der vorhergehenden Ansprüche,
**dadurch gekennzeichnet,**
**dass** das Laderaumprofil von einem entsprechend vertikal umlaufenden Profil gebildet wird, welches mit dem Lastkraftwagen oder dem Lastkraftwagenanhänger verbunden oder verbindbar ist.

8. Ladungsfixierungsgurtsystem nach einem der vorhergehenden Ansprüche,
**dadurch gekennzeichnet,**
**dass** eine Mehrzahl besagter Ladungsfixierungsgurtsysteme über die Länge der Ladefläche des Lastkraftwagens und/oder des Lastkraftwagenanhängers verteilt angeordnet sind.

9. Ladungsfixierungsgurtsystem nach einem der vorhergehenden Ansprüche,
**dadurch gekennzeichnet,**
**dass** die Feder- oder Teleskopmittel, auf denen die besagten oberen Umlenkrollen befestigt sind, aus elastischen Bändern bestehen.

## Claims

1. Load fixing belt system for trucks or truck trailers, in which at least one roller or ratchet pulling in the belt length of a fixing belt (10), via which the belt length that can be lashed over the load to be fixed can be changed and fixed, is arranged on the bottom side of a loading surface of a truck or a truck trailer, wherein the fixing belt (10) is led over all the corners of the clear load space profile via deflection elements, and at least the upper deflection elements are fixed to springs or telescopic means, in such a way that the latter can be moved onto the load by the tautening of the fixing belt (10) and can be laid on the same,
**characterized in that** the deflection elements are deflection rollers (11, 12), and **in that** the deflection rollers (11, 12) are arranged at the top in carriages (13) which can each run upwards and downwards, guided in an upright profile (14), and can be moved onto the load by tautening the circumferential fixing belt (10).

2. Load fixing belt system according to Claim 1,
**characterized in that**
the clear load space profile is rectangular.

3. Load fixing belt system according to Claim 2,
**characterized in that**
in each of the four corners of the clear load space profile there is arranged a deflection roller (11, 12) for the fixing belt (10), and **in that** at least one of the lower deflection rollers is arranged as a ratchet (2) tautening the fixing belt and fixing it in the resultant variable fixing belt length.

4. Load fixing belt system according to one of the preceding claims,
**characterized in that**
the ratchet (2) is provided with an automatically controllable actuating means, by means of which the tautening of the fixing belt (10) over the load can be actuated from a remote control.

5. Load fixing belt system according to one of the preceding claims,
**characterized in that**
sensors are provided, which determine the final position of the fixing belt (10) lashed completely on the load by means of a force measurement, and generate a corresponding reporting signal.

6. Load fixing belt system according to one of the preceding claims,
**characterized in that**
a load space profile that is not just rectangular but also a load space profile that is pentagonal or polygonal can also be taken into account **in that** the position of the deflection rollers, at least at the top, describe a corresponding polygon, and **in that** at each corner or inflection point of the polygon, a deflection roller fixed to springs and/or telescopic means is provided.

7. Load fixing belt system according to one of the preceding claims,
**characterized in that**
the load space profile is formed by a profile running around correspondingly vertically, which is or can be connected to the truck or the truck trailer.

8. Load fixing belt system according to one of the preceding claims,
**characterized in that**
a multiplicity of aforesaid load fixing belt systems are distributed over the length of the loading surface of the truck and/or the truck trailer.

9. Load fixing belt system according to one of the preceding claims,
**characterized in that**
the spring or telescopic means on which the aforesaid upper deflection rollers are fixed consist of elastic straps.

## Revendications

1. Système de sangle de fixation de charge pour un camion ou une remorque de camion, dans lequel au moins un rouleau ou rochet recueillant la longueur de sangle d'une sangle de fixation (10) est disposé sur le côté de plancher d'une surface de chargement d'un camion ou d'une remorque de camion, ledit rouleau ou rochet permettant de modifier ou de fixer la longueur de sangle amarrable via le bien à charger devant être fixé, la sangle de fixation (10) étant guidée sur l'ensemble des coins du profilé de gabarit intérieur de charge via des éléments de déviation et au moins les éléments de déviation supérieurs étant fixés aux moyens télescopiques et à ressort, de telle sorte que ceux-ci puissent être déplacés sur la charge par le resserrement de la sangle de fixation (10) et puissent être placés sur ladite charge, **caractérisé en ce que** les éléments de déviation sont des rouleaux de déviation (11, 12) et que les rouleaux de déviation (11, 12) sont disposés en haut dans les coulisseaux (13) pouvant respectivement avancer en avant et en arrière de façon guidée dans un profilé (14) disposé de façon droite et pouvant être déplacés sur la charge par resserrement de la sangle de fixation (10) placée autour.

2. Système de sangle de fixation de charge selon la revendication 1, **caractérisé en ce que** le profilé de gabarit intérieur de charge est quadrangulaire.

3. Système de sangle de fixation de charge selon la revendication 2, **caractérisé en ce qu'**un rouleau de déviation (11, 12) est disposé dans chacun des quatre coins du profilé de gabarit intérieur de charge pour la sangle de fixation (10) et qu'au moins un des rouleaux de déviation est disposé sous la forme d'un rochet (2) resserrant la sangle de fixation et fixant la longueur de sangle de fixation variable en résultant.

4. Système de sangle de fixation de charge selon l'une quelconque des revendications précédentes, **caractérisé en ce que** le rochet (2) est pourvu d'un moyen d'actionnement automatiquement pilotable à travers lequel le resserrement de la sangle de fixation (10) peut être actionné sur l'ensemble de la charge, par l'intermédiaire d'une télécommande.

5. Système de sangle de fixation de charge selon l'une quelconque des revendications précédentes, **caractérisé en ce que** des capteurs sont prévus, ceux-ci calculant la position d'extrémité de la sangle de fixation (10) entièrement amarrée sur la charge par l'intermédiaire d'une mesure de force et générant un signal d'état correspondant.

6. Système de sangle de fixation de charge selon l'une quelconque des revendications précédentes, **caractérisé en ce qu'**un profilé d'espace de chargement pouvant non seulement être quadrangulaire mais aussi prendre la forme d'un pentagone ou d'un polygone peut être pris en compte **en ce que** la position des rouleaux de déviation décrit au moins en haut un polygone correspondant et qu'un rouleau de déviation fixé sur les moyens télescopiques et/ou à ressort est disposé dans chaque point d'angle ou d'inflexion du polygone.

7. Système de sangle de fixation de charge selon l'une quelconque des revendications précédentes, **caractérisé en ce que** le profilé d'espace de chargement est formé par un profilé périphérique vertical correspondant relié ou pouvant être relié au camion ou à la remorque de camion.

8. Système de sangle de fixation de charge selon l'une quelconque des revendications précédentes, **caractérisé en ce qu'**une pluralité desdits systèmes de sangle de fixation de charge est disposée de façon répartie sur l'ensemble de la longueur de la surface de chargement du camion et/ou de la remorque de camion.

9. Système de sangle de fixation de charge selon l'une quelconque des revendications précédentes, **caractérisé en ce que** les moyens télescopiques et à ressort sur lesquels lesdits rouleaux de déviation supérieurs sont fixés se composent de courroies élastiques.
